# EUROPEAN PATENT SPECIFICATION

(11) **EP 0 469 592 B1**
(45) Date of publication and mention of the grant of the patent: **10.05.2000**
(21) Application number: 91112906.2
(22) Date of filing: 31.07.1991
(51) Int. Cl.: G06F 15/02

(54) **Small electronic apparatus with updatable memory means**
Kleines elektronisches Gerät mit aufdatbarem Speicher
Petit dispositif électronique avec des moyens de mettre la mémoire à jour

(30) Priority: 01.08.1990 JP 20550890; 03.08.1990 JP 20699490
(43) Date of publication of application: 05.02.1992
(73) Proprietor: SHARP KABUSHIKI KAISHA, Osaka-shi, Osaka-fu 545-0013 (JP)
(72) Inventor: Shintaku, Yoshihiro, Nara-shi, Nara-ken (JP); Matsuda, Eichika, Nara-ken (JP); Okuno, Hideki, Nara-ken (JP); Takada, Yuji, Nara-shi, Nara-ken (JP)
(74) Representative: Müller, Frithjof E., Dipl.-Ing.

(56) References cited:
- EP-A- 0 344 803
- IBM TECHNICAL DISCLOSURE BULLETIN. vol. 19, no. 7, December 1976, NEW YORK US pages 2419 - 2423 HUBBARD 'PERSONAL COMPUTER'

## Description

### BACKGROUND OF THE INVENTION

### 1. Field of the Invention:

The present invention relates to a small electronic apparatus, and more particularly to a small electronic apparatus such as a so-called "electronic organizer" or "electronic memo" which is capable of storing various input data.

### 2. Description of the Prior Art:

Small electronic apparatus with built-in telephone book and business card file functions, such as so-called "electronic organizers", are now widely used. The operator of such a conventional type small electronic apparatus can enter and store their personal data into the electronic apparatus using the above-mentioned functions. Such a conventional small electronic apparatus is usually provided with a display device on which the stored data can be displayed as required.

In one example of such conventional electronic apparatus, a set of personal data that can be entered using the telephone book function consists of three data items, i.e. the name, the telephone number, and the address. To create one personal data set on this electronic apparatus, the operator enters the data items of name, telephone number and address in sequence to store them in the apparatus, following the guidance displayed on a display device. When updating or modifying the stored personal data, the three data items are displayed on the display device, and the operator can update or modify any of these data items.

As described above, personal data handling functions incorporated in a conventional small electronic apparatus are designed on the assumption that they handle data items such as names, telephone numbers, addresses, etc. which do not need frequent changes once entered. Therefore, such a conventional small electronic apparatus is not suitable for handling data items such as meeting records with a person which always need to enter additional data or which need frequent updating as to, for example, the date of the last meeting with that person. More specifically, when updating data in such a conventional small electronic apparatus, data items such as names and telephone numbers which usually do not need updating or entering additional data are also enabled for updating, thus presenting the possibility of accidentally updating or even erasing those data items that actually do not need updating, when erroneously operated.

Furthermore, in the above conventional small electronic apparatus, the data items such as a name, etc. that make up personal data consist simply of character strings. Therefore, such a conventional small electronic apparatus is not suitable for handling information which indicates, for example, whether or not a New Year's card is to be sent to a certain person. Such information may be properly called "switch type information". In a conventional small electronic apparatus, information such as whether a New Year's card is to be sent or not could be included, for example, in the address data item. In that case, a character string "New Year's card YES" or "New Year's card NO" would have to be inserted in the address data item.

Prior art document EP-A-0 344 803 discloses an electronic device with a calendar function. In this electronic device, a memory unit comprises a memory area for storing the date (year, month and day) of a schedule, a memory area for storing a data for informing whether or not an alarm signal is generated, a memory area for storing the alarm time, a memory area for storing the beginning time of the schedule, a memory area for storing the ending time of the schedule, and a memory area for storing the contents of the schedule. The data of the schedule are stored in the respective areas of the memory upon operating an enter key.

Further, prior art document IBM Technical Disclosure Bulletin, vol. 19, no. 7, December 1976, New York, US, pages 2419 to 2423, describes a personal computer including a livid crystal display, a magnetic bubble memory storage and a power source. In this personal computer respective entered messages appear on the display.

### SUMMARY OF THE INVENTION

It is an object of the present invention to provide a small portable electronic data-keeping device which is able to update selected data while maintaining the integrity of the other data when the selected data is being updated.

To solve this object the present invention provides a small portable electronic data-keeping device as specified in claim 1. A preferred embodiment of the invention is described in claim 2.

None off above prior art documents discloses or even suggests a small portable electronic data-keeping device comprising first and second memory means, wherein data updating means isolates a first data item from other data stored in the first memory means, so as to maintain the integrity of the other data stored in this first memory means, while the first data item is being updated using data rewriting means together with display means and second memory means.

The present invention provides a small portable electronic data-keeping device comprising especially a first memory, a second memory, data updating means for updating a first data stored in the first memory, said data updating means comprising: copy means for copying the first data stored in the first memory to the second memory in response to an user instruction, wherein the copied first data is stored as second data in the second memory, data rewriting means for rewriting the second data stored in the second memory in response to a rewrite instruction from the user, display means for displaying the rewritten data stored in the second memory and data writing means for replacing the first data stored in the first memory with the rewritten data. In this portable electronic data-keeping device the data updating means isolates the first data from the other data stored in the first memory so as to maintain the integrity of the other data stored in the first memory, while the first data is being updated.

The small electronic device of this invention, which overcomes the above-discussed and numerous other disadvantages and deficiencies of the prior art, comprises especilly: first memory means for storing data which include a plurality of data items; and data updation means for updating at least one predetermined data item stored in said first memory means.

In the small electronic device of the present invention, out of a plurality of data items stored in the first storage means, at least one specified data item alone is enabled to be updated by a data updating means. Accordingly, as long as the data updating means is used, any other data item than the one specified is securely prevented from being updated. Therefore, when a data item other than those that do not need updating is specified as the data item for updating, there is no possibility of accidentally updating the data items that do not need updating.

The device further comprises a display unit, and second memory means, said data updation means comprising: transfer means for, in response to data updation instruction input by an operator, transferring said predetermined data item stored in said first memory means to said second memory means; data rewriting means for, in response to an operation by an operator, rewriting said predetermined data item stored in said second memory means; display means for displaying said predetermined data item stored in said second memory means, on said display unit; and data writing means for, in response to an operation by an operator, replacing said predetermined data item stored in said first memory means with said predetermined data item stored in said second memory means.

When a data update request is received from the operator, the data updating means transfers the specified data item to second storage means by using transfer means, so that only the data item stored in the second storage means is enabled to be rewritten by rewriting means. Also, the contents of the data item being rewritten in the second storage means are displayed on the display device by display means, allowing the operator to check the data item as it is being rewritten. When the termination of the rewrite operation is instructed by the operation of the operator, the contents of the specified data item in the first storage means is replaced by the contents of the second storage means by writing means, thus completing the data update operation. Thus, in this embodiment, the data item to be updated is distinctly separated from other data items on the screen presented to the operator as well as in the operator's operating procedure.

In another aspect of the invention, the small electronic device according to the invention comprises: memory means for storing data sets each having a plurality of data items, each of said data items including one or more fixed-length data items, said fixed-length data items having any one of two or more predetermined values; and setting means for, in response to an operation by an operator, setting one of said fixed-length data items to any one of said two or more predetermined values.

In the above-mentioned small electronic device, the memory means stores data sets each having a plurality of data items each of which includes one or more fixed-length data items. The fixed-length data items have any one of two or more predetermined values, and can hold so-called switch type information. The operator can set one of the fixed-length data items to any one of the two or more predetermined values, using the setting means.

In a preferred embodiment, each of said data items further include one or more variable-length data items each corresponding to said fixed-length data items.

In a preferred embodiment, the contents of each of said variable-length data items are changeable by an operator.

The device further comprises display means for simultaneously displaying the contents of at least one of said variable-length data items and the values of the fixed-length data items which respectively correspond to said at least one of said variable-length data items.

Thus, the invention described herein makes possible the objectives of:
(1) providing a small electronic device in which any data item that does not need updating is prevented from being accidentally updated when updating data; and
(2) providing a small electronic device which is suitable for handling so-called switch type information such as whether a New Year's card is to be sent or not.

### BRIEF DESCRIPTION OF THE DRAWINGS

This invention may be better understood and its numerous objects and advantages will become apparent to those skilled in the art by reference to the accompanying drawings as follows:
Figure 1 is a perspective view showing the external appearance of an electronic organizer of one embodiment of the invention and a memory card to be inserted thereinto.
Figure 2 schematically shows the internal configuration of the memory card shown in Figure 1.
Figure 3 is a plan view of the memory card illustrated in Figure 2.
Figure 4 is a block diagram illustrating the hardware configuration of the electronic organizer shown in Figure 1.
Figure 5 shows a memory map of the electronic organizer shown in Figure 1.
Figure 6 shows a function selecting section of the electronic organizer shown in Figure 1.
Figure 7 is a flowchart illustrating the operation, when power is turned on, of the electronic organizer shown in Figure 1.
Figure 8 schematically shows the configuration of a telephone book memory area used in a telephone book program of the electronic organizer shown in Figure 1.
Figure 9 is a flowchart illustrating the operation of the telephone book program.
Figures 10A to 10C show examples of the display of an LCD during the operation of the telephone book program.
Figure 11 schematically shows another configuration of the telephone book memory area.
Figure 12 schematically shows further configuration of the telephone book memory area.
Figure 13 is a flowchart illustrating the operation in the mode for telephone book data entry of the telephone book program.
Figure 14 is a flowchart illustrating the operation of data entry for fixed elements in the operation of telephone book data entry of the telephone book program.
Figure 15 shows the display when data for fixed elements are entered.
Figure 16 is a diagram illustrating the operation in the data call mode of the telephone book program.

### DESCRIPTION OF THE PREFERRED EMBODIMENTS

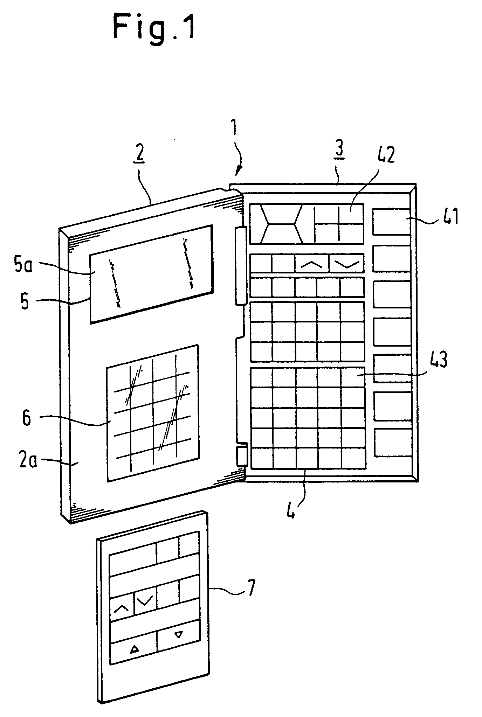

Figure 1 shows an embodiment of the invention. This embodiment is an electronic organizer **1** which uses a memory card **7**. The electronic organizer **1** comprises a body **2**, and a lid **3** provided with a keyboard **4**. The keyboard **4** comprises: a function selecting section **41** which includes function selection keys used to select functions such as a telephone book function and to start the application program corresponding to the selected function; an operation instructing section **42** which includes a power key, function keys used to perform various operations, and cursor movement keys; and a data entry section **43** which includes character keys for entering character data, and numeric keys for entering numeric data. The function keys include an "ADDITIONAL ENTRY" key, a "MEETING RECORD" key, and a "PERSONAL DATA" key. The cursor movement keys act also as function keys for performing various function when used in conjunction with the "function" keys provided in the operation instructing section **42**.

On the front of the body **2**, there are provided a liquid crystal display (LCD) **5** capable of displaying multiple lines of text and graphics, and a transparent keyboard **6**. Other types of display device having a low power consumption may be used instead of the LCD **5**. When the memory card **7** is inserted into position through a slot (not shown) provided in the bottom of the body **2**, the front face of the memory card **7** can be seen through the transparent keyboard **6**. The transparent keyboard **6** is used when executing the application program stored in the memory card **7**.

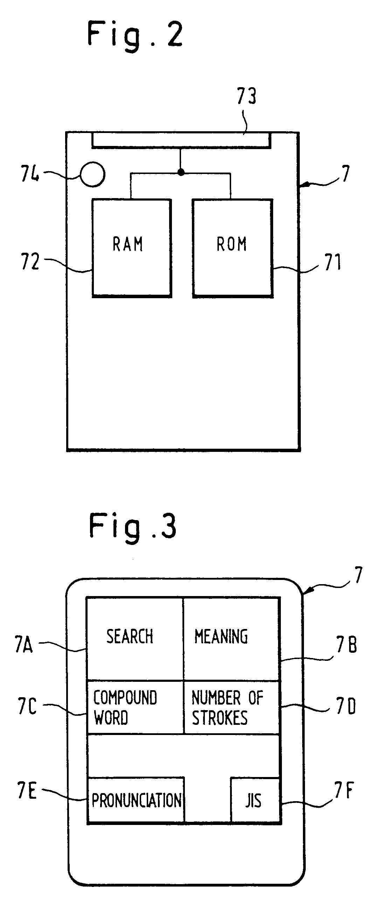

Figure 2 is a schematic diagram showing the internal configuration of the memory card **7**. As depicted, the memory card **7** contains a ROM **71** storing an application program, a RAM **72** for storing variable information generated during the execution of the application program, a female connector **73** for connecting the ROM **71** and RAM **72** to the electronic organizer **1** of Figure 1, and a backup battery **74** for retaining information stored in the RAM **72**. When the application program stored in the ROM **71** is the type that does not generate variable information during the execution thereof, either the RAM **72** or the battery **74** need not be provided.

As shown in Figure 3, key symbols **7A-7F** specific to the application program of the memory card **7** are printed on the front face thereof. The key symbols **7A-7F** do not function as keys, but actual key entries are made using the transparent keyboard **6**.

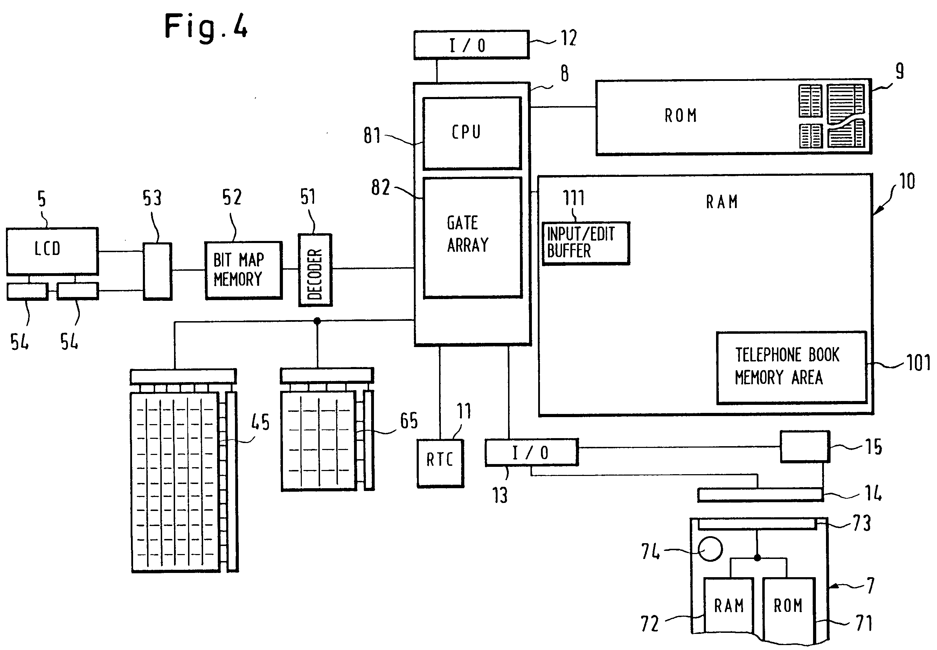

Figure 4 shows the hardware configuration of the electronic organizer **1**. A control section **8** for controlling the electronic organizer **1** comprises a CPU **81** and a gate array **82**.

The LCD **5** shown in Figure **1** is connected to the control section **8** via a decoder **51**, a bit map memory **52**, a common driver **53**, and a segment driver **54**. The data to be displayed on the LCD **5** is supplied from the control section **8** to the decoder **51** which in turn decodes the data and writes it into the bit map memory **52**. The bit map memory **52** is a memory in which one bit is assigned to each of every pixels of the LCD **5**. In the bit map memory **52**, the bits corresponding to white pixels are set to "1" and the other bits corresponding to black pixels are set to "0". The common driver **53** and the segment driver **54** are used to display characters and graphics on the LCD **5** according to the contents stored in the bit map memory **52**.

The reference numeral **45** designates a key matrix for detecting key entries from the keyboard **4**, while the reference numeral **65** indicates a key matrix for detecting key entries from the transparent keyboard **6**.

Also connected to the control section **8** are a ROM **9** and a RAM **10**. The ROM **9** stores: a basic program for performing basic functions such as data input from the keyboard **4** and the transparent keyboard **6** and visual presentation on the LCD **5**; a plurality of application programs for performing various functions including the telephone book function; and a plurality of tables having fixed contents and used in the application programs. The RAM **10** is used to store variable information needed by the application programs stored in the ROM **9**. The RAM **10** comprises: a variable-length telephone book memory area **101** used by a telephone book program which is an application program to achieve the telephone book function; and an input/edit buffer **111** the contents of which are rewritten in accordance with the operation via the keyboard **4**. The RAM **10** also has memory areas (not shown) used by other application programs. Further, the RAM **10** has areas (not shown) for storing various variables, pointers, and flags.

Furthermore, a real time clock (RTC) **11**, an expansion terminal **12** for connecting an external device such as a printer, and an expansion terminal **13** exclusively used for connection of a memory card are connected to the control section **8**. Connected to the expansion terminal **13** are a male connector **14** which is plugged into the female connector **73** of the memory card **7** and a detecting section **15** for detecting the connection of the male connector **14** to the female connector **73** of the memory card **7**.

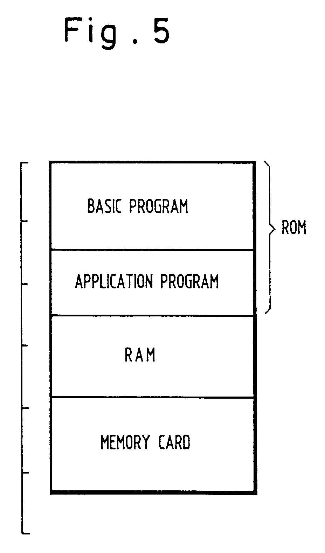

Figure 5 shows the memory map of the electronic organizer **1**. As shown in Figure 5, the addressees of the electronic organizer **1** are assigned to the internal ROM **9** of the electronic organizer **1**, the internal RAM **10** of the electronic organizer **1**, and the internal memory of the memory card **7**, in this order. Since the ROM **9** and the RAM **10** have fixed capacities, the addresses assigned to them are fixed. On the other hand, addresses starting at the address next to the last address of the internal RAM **10** of the electronic organizer **1** are assigned to the internal memory of the memory card **7** (the internal memory consists of the ROM **71** and RAM **72** or only of the ROM **71** depending on the case). The capacity of the internal memory of the memory card **7** may vary from card to card. This means that the last address assigned to the internal memory of the memory card may vary from card to card. However, the upper limit of the last address is determined by the specification of the control section **8**.

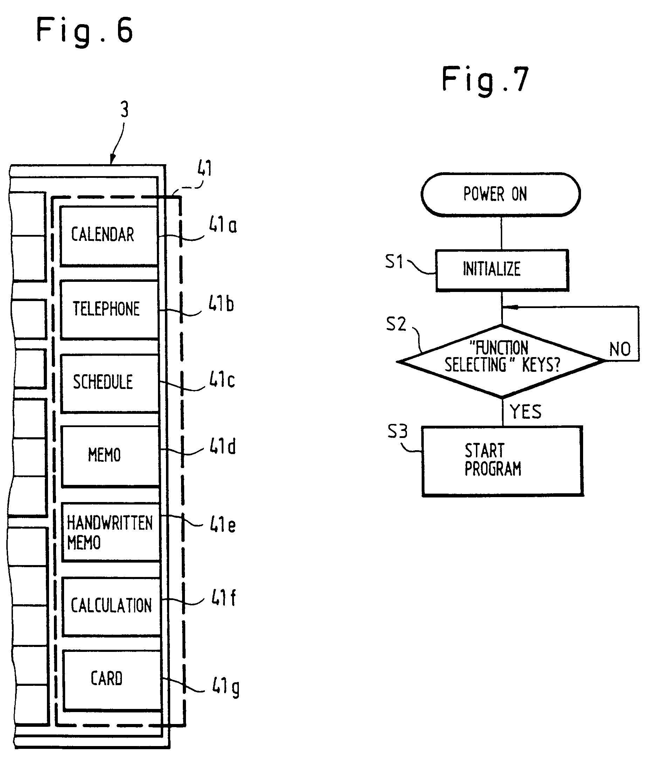

Referring now to Figures 6 and 7, we will describe the operation of the electronic organizer **1** when power is turned on.

Figure 6 shows the function selecting section **41** having seven function selection keys **41a** to **41g**. The function selection keys **41a** to **41f** are used to start the application programs stored in the internal ROM **9** of the electronic organizer **1**. Specifically, the function selection key **41b** is used to start the telephone book program. On the other hand, the function selection key **41f** is used to start the application program of the memory card **7** loaded into the electronic organizer **1**.

As shown in the flowchart of Figure 7, when power is turned on, each section of the electronic organizer **1** is initialized (step S1), enabling the key entry through the function selection keys **41a** to **41g** (step S2). When any one of the function selection keys is depressed, the application program corresponding to the depressed function selection key is started (steps S3). Even when one application program has been started, any other application program can be started by depressing the corresponding function selection keys **41a-41g**. Also, step S2 may be omitted and the system may be designed so that the application program being executed when the power was last turned off or a prescribed application program will be started automatically.

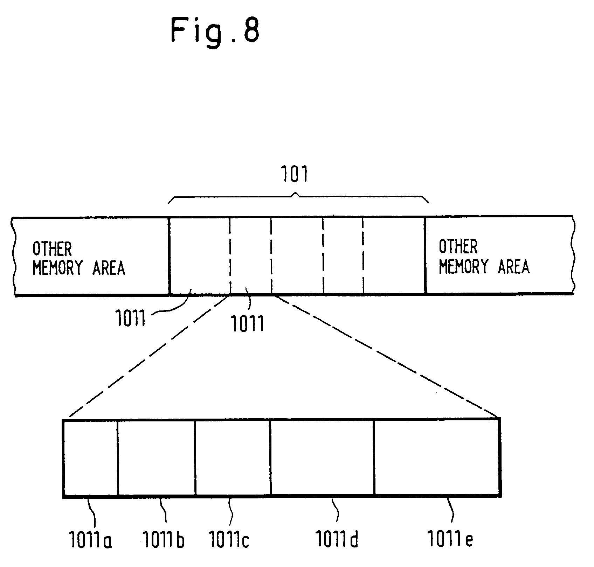

The telephone book program will be described. Figure 8 schematically shows the telephone book memory area **101** used by the telephone book program. In the telephone book memory area **101**, a plurality of telephone book data sets **1011** are stored. Each of telephone book data sets **1011** is variable in length and consists of five data items **1011a**-**1011e**. The data items **1011b**-**1011e** consist of variable-length character strings respectively representing the name, telephone number, address, and meeting record entered by the operator. Of these data items, the data items **1011b**, **1011c** and **1011d** representing the name, telephone number, and address are collectively referred to as "personal data". Usually, the personal data do not need frequent changes once entered, and should not be easily updated. On the other hand, the data item **1011e** representing the meeting record always needs entering additional data. The data item **1011a** is a fixed-length data item which is automatically generated by the telephone book program and which indicates the data length (the number of bytes) of the telephone book data **1011**. The data items **1011a**-**1011e** are separated from one another by a special code called "a data separator".

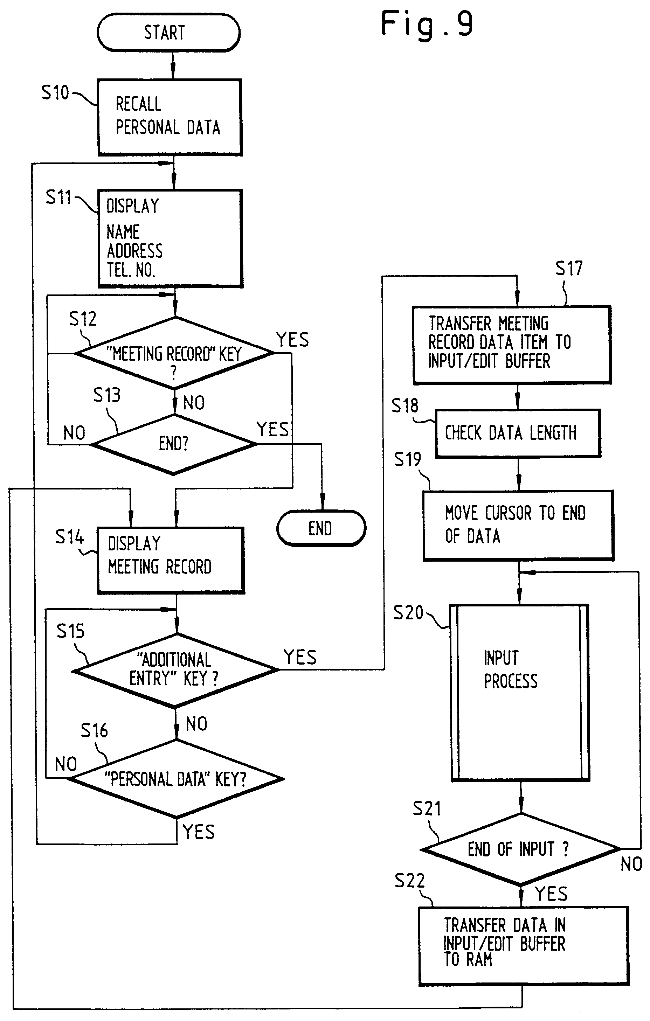

Next, referring to Figure 9, the operation of the telephone book program will be described. The program steps for entering the data items of the name, telephone number, address and meeting record, and the program steps for updating the data items of the name, telephone number and address are not shown in Figure 9.

The telephone book program is started when the function selection key **41b** is depressed. In step S10, the operator appropriately operates the "RECALL" key provided in the operation instructing section **42**, so as to retrieve the desired personal data **1011** from the telephone book memory area **101**. In step S11, the thus retrieved personal data (data items **1011b**, **1011c** and **1011d** representing the name, telephone number and address, respectively) is displayed on the LCD **5**. When the "MEETING RECORD" key is depressed while the personal data is displayed, the process jumps from step S12 to step S14, while saving the personal data in a prescribed area within the RAM **10** and displaying only the meeting record data item **1011e** corresponding to the personal data on the LCD **5**. The displayed data item **1011e** can be scrolled on the LCD **5** using the cursor movement keys. On the other hand, when the "MEETING RECORD" key is not depressed, the process proceeds to step S13. When an operation to terminate the program is performed, the telephone book program is terminated; otherwise, the process returns to step S12.

When the "ADDITIONAL ENTRY" key is depressed while the meeting record data item **1011e** is displayed, the process jumps from step S15 to step S17. Otherwise, the process proceeds to step S16. When the "PERSONAL DATA" key is depressed in step S16, the process returns to step S11 in which the personal data saved in the prescribed area is brought back onto the display. Otherwise, the process returns to step S15.

In step S17, the meeting record data item **1011e** is transferred to the input/edit buffer **111**, and an input/edit program is started. When the input/edit program is started, the data held in the input/edit buffer **111** is displayed on the LCD **5**. In step S18, the data length of the transferred data item **1011e** is checked, and then in step S19 a cursor is displayed at a position immediately after the last character in the character string that is read from the input/edit buffer **111** and displayed on the LCD **5**. In step S20, the operator enters data, and the entered data is appended to the contents of the input/edit buffer **111**. At this time, it is possible to rewrite the contents of the input/edit buffer **111**.

Thus, in this embodiment, only the meeting record data item **1011e** is enabled to be updated in "ADDITIONAL ENTRY" operation, thereby preventing the personal data that does not need updating from being updated erroneously.

When the "ENTER" key (not shown) provided on the keyboard **4** is depressed to instruct the completion of the entry, the process proceeds from step S21 to step S22. In step S22, the contents of the input/edit buffer **111** are transferred to the telephone book memory area **101** to replace the contents of the data item **1011e**, specified for updating, by the contents of the input/edit buffer **111**. The input/edit program is terminated.

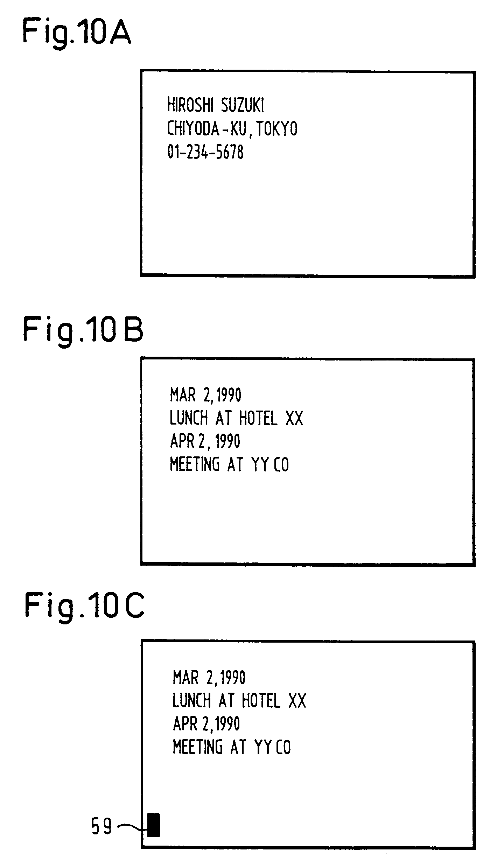

Figures 10A to 10C show examples of contents displayed on the LCD **5** during the execution of the telephone book program. Figure 10A shows the personal data displayed in step S11 (Figure 9). With the display of Figure 10A, when the "MEETING RECORD" key is depressed, the data item representing the meeting record is displayed as shown in Figure 10B (corresponding to step S14 in Figure 9). With the display of Figure 10B, when the "PERSONAL DATA" key is depressed, the display returns to the one shown in Figure 10A. On the other hand, with the display of Figure 10B, when the "ADDITIONAL ENTRY" key is depressed, a cursor 59 is displayed as shown in Figure 10C, thereby enabling an additional meeting record to be entered (corresponding to step S19 in Figure 9). When the "ENTER" key is depressed to instruct the completion of the entry while the display is as shown in Figure 10C, the display returns to the one shown in Figure 10B.

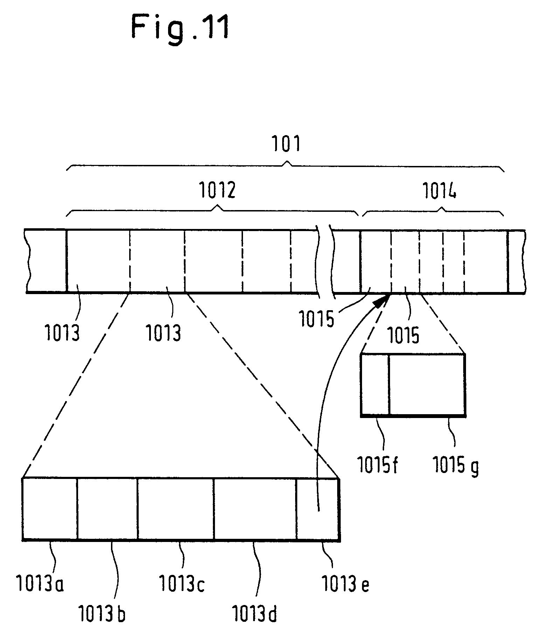

The telephone book memory area **101** may be configured as shown in Figure 11. In the configuration of the telephone book memory area **101** shown in Figure 11, the data items representing the meeting record are collectively stored in a memory area separately provided from a memory area in which the corresponding personal data is stored. Accordingly, each set of telephone book data consists of: personal data **1013** stored in a personal data memory area **1012** in the telephone book memory area **101**; and meeting record data **1015** stored in a meeting record memory area **1014** in the telephone book memory area **101**. The personal data **1013** is variable in length and consists of five data items **1013a**-**1013e**. The data items **1013b**, **1013c** and **1013d** consist of variable-length character strings respectively representing the name, telephone number and address entered by the operator. The data item **1013e** is a pointer to the corresponding meeting record data **1015**, i.e. the address of the meeting record data **1015**. The data item **1013a** is a data item similar to the data item **1011a** in Figure 8 and indicates the data length (the number of bytes) of the personal data **1013**. The data items **1013a**-**1013e** are separated from one another by a data separator.

The meeting record data **1015** consists of two data items **1015f** and **1015g**. The data item **1015g** consists of a character string entered as a meeting record by the operator. The data item **1015f** is fixed in length and indicates the data length of the meeting record data **1015**.

There is no substantial difference between the configuration of the telephone book memory area **101** of Figure 8 and that of Figure 11. A configuration, whichever appropriate, should be selected considering the balance, etc. with the configuration of other portions of the electronic organizer.

It will be appreciated that the invention is not limited to the above-described embodiment. For example, two or more data items which are enabled for "addition or updating" may include the meeting record data item, or alternatively may not include such a data item.

According to the invention, a small electronic apparatus is provided in which, of a plurality of data items, any data item that does not need updating is prevented from being erroneously updated when updating data.

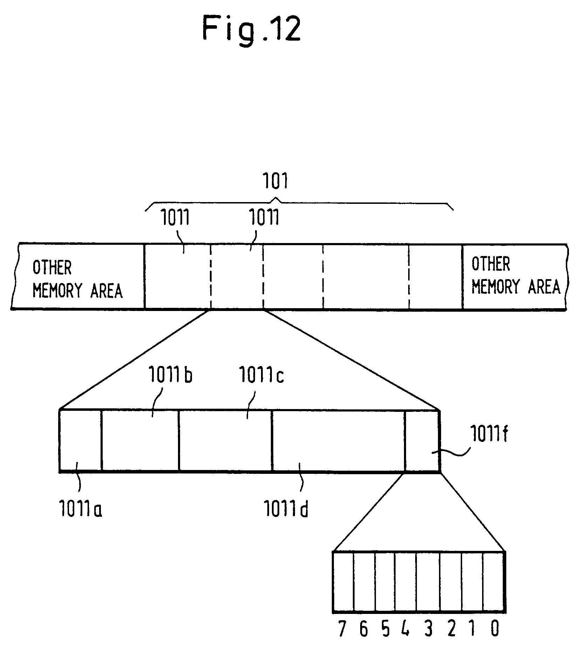

Figure 12 schematically shows another configuration of the telephone book memory area **101** used by the telephone book program. Figure 12 shows the state of the telephone book memory **101** in which a plurality of telephone book data sets **1011** are stored. Each of the telephone book data sets **1011** is variable in length and consists of four data items **1011a**-**1011d**, and a fixed element storage section (one byte) **1011f** capable of storing a maximum of eight fixed-length data items (hereinafter, sometimes referred to as "fixed elements"). Each of the fixed-length data items occupies one bit. The data items **1011a**-**1011d** are the same data items as those shown in Figure 8 and described in the corresponding description. Since the telephone book data **1011** includes variable-length data items, the data items **1011a**-**1011d** and the fixed element storage section **1011f** are separated from one another by a data separator.

As shown in Figure 12, the fixed element storage section **1011f** consists of eight bits from bit 0 to bit 7. Of these eight bits, five bits from bit 0 to bit 4 are used to store data items (fixed elements). In this embodiment, the fixed elements stored in bit 0 to bit 4 are used to represent yes/no information on New Year's card, yes/no information on midyear gift, yes/no information on summer greeting card, yes/no information on year-end gift, and yes/no information on Christmas card, respectively. Interpretation of such yes/no information is decided by the operator. In one example of interpretation, data "1" stored in bit 0 may be interpreted to mean that a New Year's card is to be sent, and data "0" stored in bit 0 to mean that a New Year's card is not to be sent. In another example of interpretation, data "1" stored in bit 0 may be interpreted to mean that a New Year's card has been received, and data "0" stored in bit 0 to mean that a New Year's card has not been received. The procedure for setting bits 0-4 to "1" or "0" is described in the following description dealing with the operation of the telephone book program.

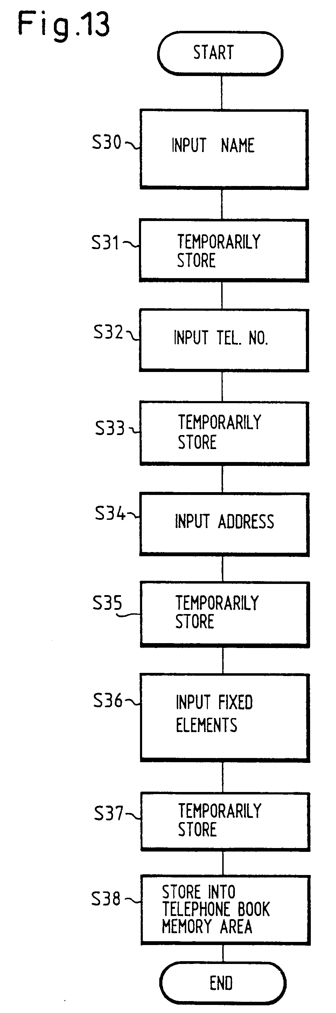

When the telephone book program is started by depressing the function selection key **41b**, the electronic organizer **1** enters the mode for telephone book data entry. The operation of the telephone book program in this mode will now be described with reference to the flowchart of Figure 13. In step S30, the operator enters a character string representing a name. In step S31, in response to the depression of the "ENTER" key (not shown) provided on the keyboard **4**, the character string entered in step S30 is temporarily stored in a prefixed memory area in the RAM **10**. In steps S32-S35, the character strings each representing the telephone number and the address are entered, and the entered character strings are temporarily stored in the prefixed memory area. In step S36, data for the fixed elements are entered. After entering data for the fixed elements, the entered fixed element data are temporarily stored in the prefixed memory area in response to the depression of the "ENTER" key (step S37). Next, the data stored in the prefixed memory area in steps S31, S33, S35, and S37 are stored in the telephone book memory area **101** in the format shown in Figure 12 (step S38).

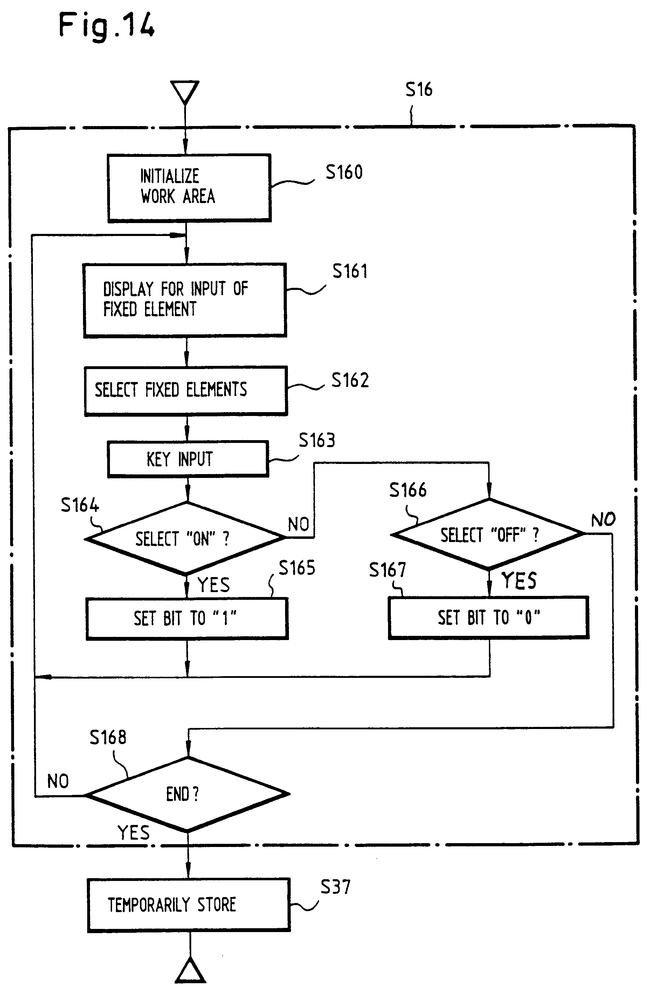

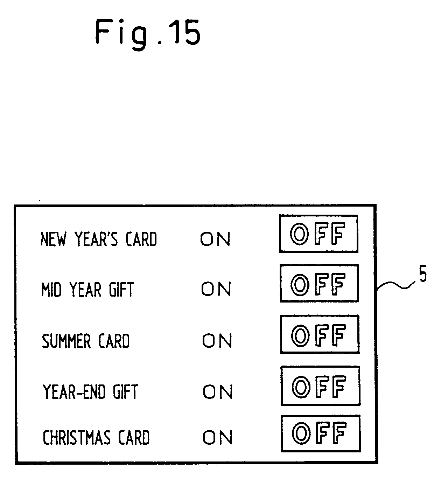

Data entry for the fixed elements will be described in further detail. For the fixed element data entry, the telephone book program secures a one-byte work area (not shown) within the RAM **10**. Bit 0 to bit 4 of the work area correspond to the respective fixed elements, and each bit stores data "1" or "0" as a value for the corresponding fixed element. Data for the fixed elements are entered by the procedure shown in the flowchart of Figure 14 which details the steps S36 and S37 of Figure 13. First, in step S160, all bits of the work area are initialized to "0". Next, a display as shown in Figure 15 is produced on the LCD **5** (step S161). As shown in Figure 15, character strings for the respective fixed elements such as "New Year's card", etc. along with "ON" and "OFF" are displayed. "ON" corresponds to data "1", and "OFF" to "0". For each fixed element, when data "1" is stored in the corresponding bit of the work area, "ON" is displayed in reverse video, and when data "0" is stored in the corresponding bit, "OFF" is displayed in reverse video. Therefore, in step S161 which immediately follows step S160, "OFF" is displayed in reverse video for all fixed elements.

In step S162, a character string such as "New Year's card" is selected using the cursor up or down movement key, thereby selecting the fixed element. Next, in step S163, the key entry made by the operator is detected. Then, the operator can select "ON" or "OFF" using the cursor left or right movement key, or can terminate the data entry for the fixed elements by depressing the "ENTER" key. When "ON" is selected, the process proceeds from step S164 to step S165 where data "1" is stored in the bit of the work area corresponding to the selected fixed element. On the other hand, when "OFF" is selected, the process proceeds from step S164 to step S166 and then to step S167 where data "0" is stored in the bit of the work area corresponding to the selected fixed element. From step S165 or S167, the process returns to step S161. When the "ENTER" key is depressed in step S163, the process proceeds from step S164 to step S37 via steps S166 and S168, and the data in the work area are transferred to the previously mentioned prefixed memory area where the data are temporarily stored.

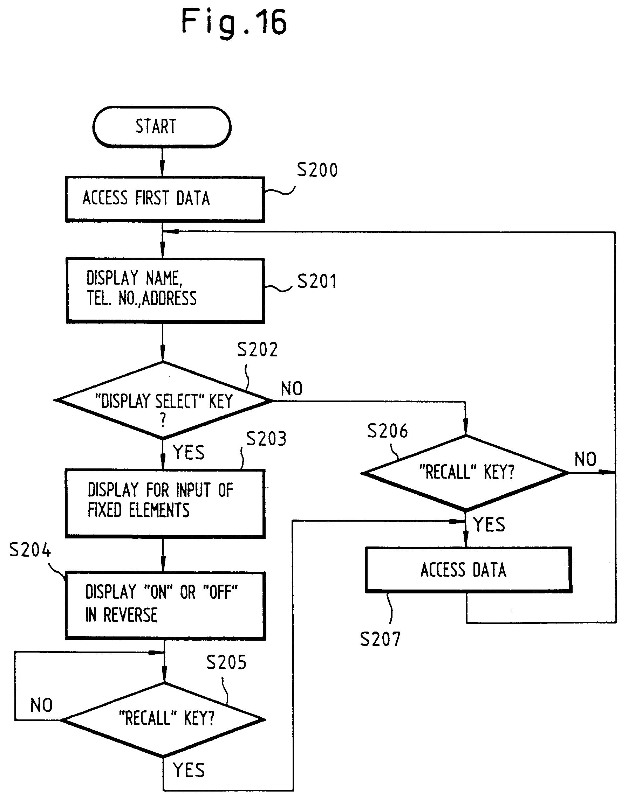

During the execution of the telephone book program, when the "RECALL" key, a function key, is depressed while the telephone book data entry is enabled, the electronic organizer **1** enters the mode in which the telephone book data is recalled for display on the LCD **5**. The operation of the telephone book program in this mode is briefly described with reference to Figure 16.

First, in step S200, the first telephone book data **1011** within the telephone book memory area **101** is accessed. In step S201, the data items **1011b**, **1011c** and **1011d** respectively representing the name, telephone number and address in the accessed telephone book data **1011** are displayed on the LCD **5**. Next, a key depression is detected, and when the "DISPLAY SELECT" key (not shown) provided on the keyboard **4** is depressed, the process proceeds from step S202 to step S203. On the other hand, when the "RECALL" key is depressed, the process jumps from step S202 to step S206 and then to S207. In step S207, access is made to the telephone book data immediately preceding or succeeding the currently accessed telephone book data **1011**, and the process returns to step S201. When the depressed key is neither the "DISPLAY SELECT" key nor the "RECALL" key, the process returns from step S202 to step S201 via step S206.

In step S203, the same display as shown in Figure 15 is produced, except that the reverse video display of "ON" or "OFF" is produced in the next step S204. In step S204, the storage section **1011f** within the accessed telephone book data **1011** is referenced, and "ON" or "OFF" is displayed in reverse video on the LCD **5** according to the state of each bit of the storage section **1011f**. Then, after the depression of the "RECALL" key, the process proceeds from step S205 to step S207.

In the above embodiment, each fixed-length data item within the telephone book data occupies one bit and takes either a binary "1" or a binary "0", but it will be appreciated that the data length of each fixed-length data item may be 2 or more bits so that the data item can take three or more values.

According to the present invention, information such as whether a New Year's card is to be sent or not can be retained in a fixed-length data item the value of which can be set by the operator, and the small electronic apparatus provided herein is therefore suitable for handling such information.

It is understood that various other modifications will be apparent to and can be readily made by those skilled in the art.

## Claims

1. A small portable electronic data-keeping device having display means (5) for displaying data, the device comprising:
a first memory means (101) for storing data in a substantially permanent state;
characterized by
a second memory means (111) for storing data in a substantially temporary state;
data updating means (S21, S22) for updating a first data item (1011e) stored in said first memory means (101), said data updating means comprising:
copy means (S17) for copying said first data item (1011e) stored in said first memory means (101) to said second memory means (111) in response to an user input instruction ("ADDITIONAL ENTRY"), wherein said copied first data item is stored as second data item in said second memory means (111);
data rewriting means (S20) for rewriting said second data item stored in said second memory means (111) in response to rewrite instructions from said user, said display means (5) displaying said rewritten data item stored in said second memory means; and
data writing means (S22) for replacing, in response to a user input completion instruction ("ENTER"), said first data item (1011e) stored in said first memory means (101) with said rewritten data item,
whereby said data updating means isolates said first data item from the other data stored in the first memory means (101) so as to maintain the integrity of the other data stored in the first memory means (101) while the first data item is being updated.

2. A small portable electronic data-keeping device according to claim 1, wherein said data stored in said first memory means (101) further includes third data, said third data comprising at least one data set, said data set including a plurality of variable-length data items and at least one fixed element storage section, said fixed element storage section storing a plurality of fixed-length data items, each of said fixed-length data items having a corresponding variable-length data item, the contents of each of said variable length data items being changeable by said user,
wherein said portable electronic data-keeping device affords for handling switch-type information.

## Patentansprüche

1. Kleine tragbare elektronische datenhaltende Vorrichtung mit einer Anzeigeeinrichtung (5) zum Anzeigen von Daten, wobei die Vorrichtung aufweist:
eine erste Speichereinrichtung (101) zum Speichern von Daten in einem im wesentlichen permanenten Zustand,
**gekennzeichnet durch**
eine zweite Speichereinrichtung (111) zum Speichern von Daten in einem im wesentlichen zeitweisen bzw. Zwischen-Zustand,
eine Datenfortschreibeinrichtung (S21, S22) zum Fortschreiben einer ersten Datengröße (1011e), die in der ersten Speichereinrichtung (101) gespeichert ist, wobei die Datenfortschreibeinrichtung aufweist:
eine Kopiereinrichtung (S17) zum Kopieren der ersten Datengröße (1011e), die in der ersten Speichereinrichtung (101) gespeichert ist, zu der zweiten Speichereinrichtung (111) abhängig von einem Benutzer-Eingabebefehl ("ZUSATZEINGABE"), wobei die kopierte erste Datengröße als zweite Datengröße in der zweiten Speichereinrichtung (111) gespeichert wird,
eine Datenumschreibeinrichtung (S20) zum Umschreiben der in der zweiten Speichereinrichtung (111) gespeicherten Datengröße abhängig von Umschreibbefehlen von dem Benutzer, wobei die Anzeigeeinrichtung (5) die umgeschriebene Datengröße anzeigt, die in der zweiten Speichereinrichtung gespeichert ist, und
eine Datenschreibeinrichtunng (S22), um abhängig von einem Benutzereingabe-Abschlußbefehl ("EINGABE") die in der ersten Speichereinrichtung (101) gespeicherte Datengröße (1011e) durch die umgeschriebene Datengröße zu ersetzen,
wodurch die Datenfortschreibeinrichtung die erste Datengröße von den anderen in der ersten Speichereinrichtung (101) gespeicherten Daten isoliert, um so die Integrität der anderen, in der ersten Speichereinrichtung (101) gespeicherten Daten aufrechtzuerhalten, während die erste Datengröße fortgeschrieben wird.

2. Kleine tragbare elektronische datenhaltende Vorrichtung nach Anspruch 1, bei der die in der ersten Speichereinrichtung (101) gespeicherten Daten außerdem dritte Daten umfassen, die wenigstens einen Datensatz aufweisen, der eine Vielzahl von Datengrößen veränderlicher Länge enthalten, und bei der wenigstens ein Speicherabschnitt für ein festes Element eine Vielzahl von Datengrößen fester Länge speichert, deren jede eine entsprechende Datengröße veränderlicher Länge hat, wobei die Inhalte von jeder Datengröße veränderlicher Länge durch den Benutzer änderbar sind,
wodurch die tragbare elektronische datenhaltende Vorrichtung ein Handhaben von Schaltertyp-Information gewährleistet.

## Revendications

1. Petit dispositif électronique portatif de conservation de données comprenant des moyens d'affichage (5) pour afficher des données, le dispositif comportant :
un premier moyen formant mémoire (101) pour emmagasiner des données dans un état sensiblement permanent;
caractérisé par
un second moyen formant mémoire (111) pour emmagasiner des données dans un état sensiblement temporaire ;
des moyens de mise a jour de données (S21, S22) pour mettre à jour un premier élément de données (1011e) emmagasiné dans ledit premier moyen formant mémoire (101), lesdits moyens de mise a jour de données comportant :
des moyens de duplication (S17) pour copier ledit premier élément de données (1011e) emmagasiné dans ledit premier moyen formant mémoire (101) dans ledit second moyen formant mémoire (111) en réponse a une instruction d'entrée (〈〈 ENTREE SUPPLEMENTAIRE〉〉) de l'utilisateur, ledit premier élément de données copié étant emmagasiné comme second élément de données dans ledit second moyen formant mémoire (111);
des moyens de réécriture de données (S20) pour réécrire ledit second élément de données emmagasiné dans ledit second moyen formant mémoire (111) en réponse a des instructions de réécriture émanant dudit utilisateur, lesdits moyens d'affichage (5) affichant ledit élément de données réécrit emmagasiné dans ledit second moyen formant mémoire ; et
des moyens d'écriture de données (S22) pour remplacer, en réponse a une instruction d'achèvement d'entrée (〈〈ENTRER〉〉) de l'utilisateur, ledit premier élément de données (1011e) emmagasiné dans ledit premier moyen formant mémoire (101) par ledit élément de données réécrit, lesdits moyens de mise à jour de données isolant ledit premier élément de données des autres données emmagasinées dans le premier moyen formant mémoire (101) de façon a maintenir l'intégrité des autres données emmagasinées dans le premier moyen formant mémoire (101) pendant que le premier élément de données est mis à jour.

2. Petit dispositif électronique portatif de conservation de données selon la revendication 1, dans lequel lesdites données emmagasinées dans ledit premier moyen formant mémoire (101) comprennent, en outre, de troisièmes données, lesdites troisièmes données comportant au moins un ensemble de données, ledit ensemble de données comprenant une multiplicité d'éléments de données de longueur variable et au moins une partie de stockage d'éléments fixes, ladite partie de stockage d'éléments fixes emmagasinant une multiplicité d'éléments de données de longueur fixe, chacun desdits éléments de données de longueur fixe ayant un élément de données de longueur variable correspondant, le contenu de chacun desdits éléments de données de longueur variable pouvant être modifié par ledit utilisateur ;
ledit dispositif électronique portatif de conservation de données permettant de manipuler des informations de type commutable.
